# EUROPÄISCHE PATENTSCHRIFT

(11) **EP 0 838 738 B1**
(45) Veröffentlichungstag und Bekanntmachung des Hinweises auf die Patenterteilung: **19.12.2001**
(21) Anmeldenummer: 97250315.5
(22) Anmeldetag: 23.10.1997
(51) Int. Cl.: G05B 15/00, G05B 19/40, G05B 23/02, G07B 17/02

(54) **Steuer- und Ueberwachungseinrichtung für ein brennstoffbeheiztes Heizgerät**
Control and monitoring device for a combustion fired heating apparatus
Dispositif de contrôle et de surveillance pour un appareil de chauffage à combustible

(30) Priorität: 23.10.1996 DE 29619180 U; 26.10.1996 DE 29619116 U; 02.11.1996 DE 19646765; 09.07.1997 DE 19730264
(43) Veröffentlichungstag der Anmeldung: 29.04.1998
(73) Patentinhaber: Vaillant N.V., 1620 Drogenbos (BE); VAILLANT S.A.R.L, 94045 Créteil Cedex (FR); Vaillant Gesellschaft m.b.H., 1231 Wien (AT); Vaillant Ltd., Rochester Kent ME2 4EZ (GB); Vaillant B.V., 1100 DT Amsterdam (NL); Vaillant GmbH, 8953 Dietikon 1 (CH); Vaillant A/S, 2690 Karlslunde (DK); Vaillant GmbH, 42859 Remscheid (DE)
(72) Erfinder: Holschbach, Peter, 42853 Remscheid (DE); Kind, Reiner, 42499 Hückeswagen (DE); Manz, Dietmar, 51707 Marienheide (DE); Schmidt, Ulrich, Dr., 40699 Erkrath (DE)
(74) Vertreter: Heim, Johann-Ludwig, Dipl.-Ing.

(56) Entgegenhaltungen:
- EP-A- 0 281 416
- EP-A- 0 325 883
- EP-A- 0 465 236
- US-A- 5 337 013

## Beschreibung

Die vorliegende Erfindung bezieht sich auf eine Steuer- und Überwachungseinrichtung für ein brennstoffbeheiztes Heizgerät, vorzugsweise für einen gasbeheizten Umlauf-Wasserheizer, gemäß dem einleitenden Teil des unabhängigen Patentanspruches.

Eine Steuer-und Überwachungseinrichtung dieser Art ist bekannt aus der EP-A-0 281 416.

Bekannt ist auch, einen Zwei-Kanal-Mikroprozessor für eine solche Steuer- und Überwachungseinrichtung einzusetzen, wobei die beiden Mikroprozessoren sich gegenseitig überwachen. Bei einer Differenz von sicherheitsrelevanten Ist-Werten eingangsseitig der beiden Mikroprozessoren oder bei sicherheitsrelevanten Stellgrößen ausgangsseitig der beiden Mikroprozessoren findet eine verriegelnde Abschaltung des brennstoffbeheizten Heizgerätes statt, beispielsweise durch ein nur noch von Hand zu reversierendes Schließen des Gasventils.

Ein solcher Zwei-Kanal-Mikroprozessor ist jedoch relativ aufwendig, da alle sicherheitsrelevanten und nicht sicherheitsrelevanten Steuervorgänge sowie die Regelvorgänge zweifach zu verifizieren sind.

Der vorliegenden Erfindung liegt die Aufgabe zugrunde, eine Steuer- und Überwachungseinrichtung der eingangs näher bezeichneten Art bei Aufrechterhaltung des gleichen Sicherheitsstandards einfacher zu gestalten.

Die Lösung der Aufgabe liegt bei einer Steuer- und Überwachungseinrichtung der eingangs näher bezeichneten Art erfindungsgemäß in den kennzeichnenden Merkmalen des unabhängigen Patentanspruchs.

Hierdurch tritt der Vorteil ein, daß man bei Mikroprozessoren auf einen vorhandenen handelsüblichen Mikroprozessor zurückgreifen kann, während der ASIC-Baustein kundenspezifisch und auf das spezielle Gerät zugeschnitten in Großserien gefertigt werden kann. Diese beiden Geräte zusammen, also der ASIC-Baustein mit dem handelsüblichen Mikroprozessor, können dann das jeweilige brennstoffbeheizte Heizgerät in seinen sicherheitsrelevanten Funktionen steuern und im übrigen regelungstechnisch nach Wunsch des Kunden beeinflussen.

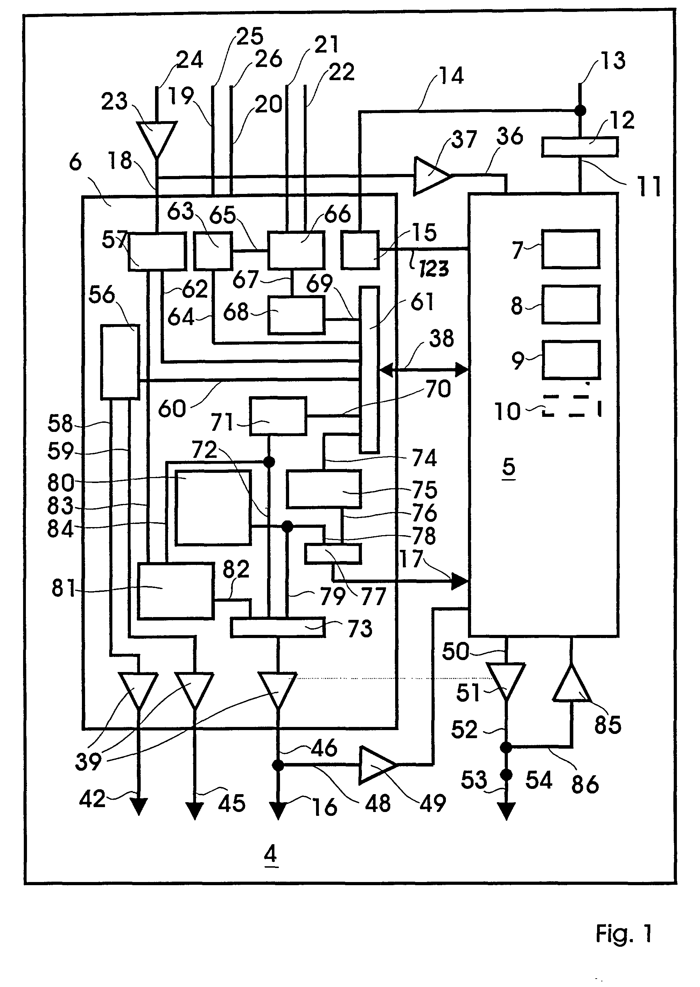

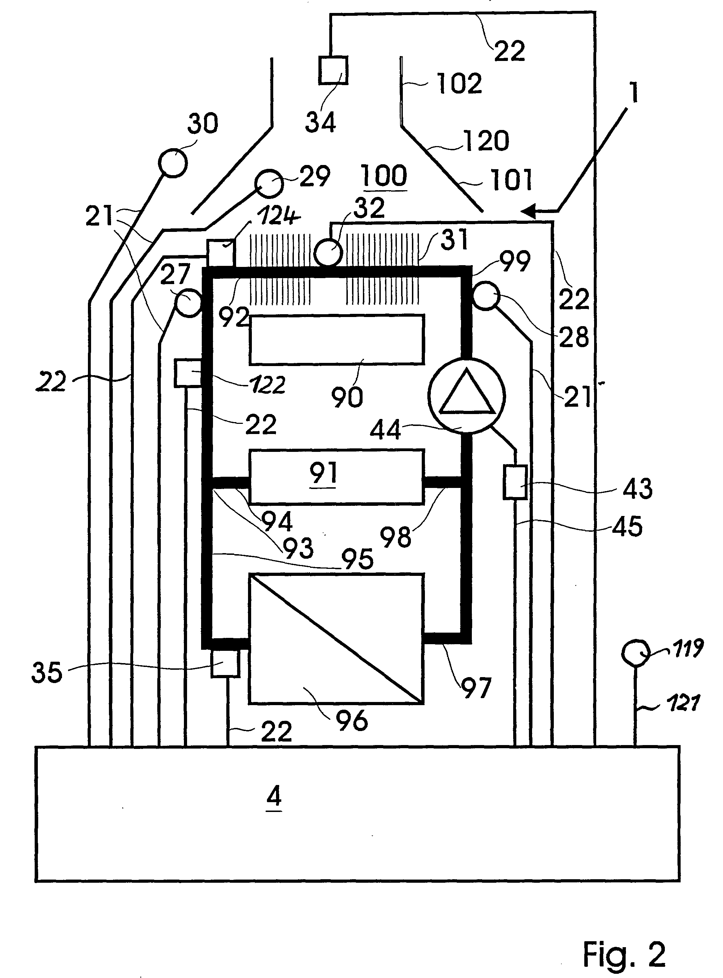

Weitere Ausgestaltungen und besonders vorteilhafte Weiterbildungen der Erfindung sind Gegenstand der abhängigen Patentansprüche. Das Ausführungsbeispiel der Erfindung wird anhand der Figuren 1 bis 5 erläutert.

Es zeigen:
Figur 1 eine Ausgestaltung der Steuer- und Überwachungseinrichtung als Blockschaltung,
Figur 2 die Anwendung auf einen mit einem atmosphärischen Gasbrenner beheizten Umlauf-Wasserheizer,
Figur 3 die Anwendung auf einen mit einem Gebläsebrenner beheizten Wasserheizer,
die Figur 4 die Anwendung auf einen mit einem Gebläsebrenner versehenen Umlauf-Wasserheizer und
Figur 5 ein Zeitplandiagramm.

In allen 5 Figuren bedeuten gleiche Bezugszeichen jeweils die gleichen Einzelheiten.

Ein Umlauf-Wasserheizer 1 oder ein Durchlauf-Wasserheizer 2 beziehungsweise ein Kessel 3 ist mit einer Steuer- und Überwachungseinrichtung 4 versehen, die im wesentlichen einerseits ein Mikrocomputer 5 und andererseits einen ASIC-Baustein 6 aufweisen. Der Mikrocomputer enthält eine Recheneinheit 7, einen Lesespeicher 8 und einen überschreibbaren Speicher 9 und gegebenenfalls ein oder mehrere EE-PROMS 10. Er ist über eine Leitung 11 an einen Spannungsregler 12 angeschlossen, der seinerseits über eine weitere Leitung 13 mit einer Betriebsspannung mit 24 Volt = versorgt ist. Von der Leitung 13 zweigt eine Leitung 14 ab, die zu einem eigenen Spannungsregler 15 im ASIC-Baustein führt. Beide Spannungsregler 12 und 15 stellen für den Mikrocomputer beziehungsweise den ASIC-Baustein eine Spannung in Höhe von 5 Volt geregelt dar. Die Spannungsversorgung durch den Spannungsregler 14 wird im ASIC-Baustein überwacht. Beim Unterschreiten einer unteren einstellbaren Spannungsgrenze wird ein Gasventil 16 des Durchlauf-Wasserheizers, Umlauf-Wasserheizers oder Kessels geschlossen, gleichzeitig wird ein Reset-Signal für den Mikrocomputer 5 gegeben. Der Reset erfolgt über eine eigene Leitung 17.

Der ASIC-Baustein besitzt eine Reihe von Eingangsleitungen 18 bis 22. Über eine Leitung 18, in der ein Verstärker 23 angeordnet ist, liegt ein Flammensignal von einer Überwachungselektrode 24 an. Ist das Heizgerät mit einem Gebläsebrenner betrieben, so wird über die Leitung 19 der Ist-Wert eines Drehzahlgebers 25 eingespeist. Die Leitung 20 ist mit einem Geber 26 für eine Luftmangelsicherung verbunden. Istwertgeber- wie für die Vorlauftemperatur, Rücklauftemperatur, Abgastemperatur im Innenraum und Abgastemperatur im Außenraum - sind an die Leitung 21 angeschlossen, die als Leitungsbündel zu verstehen ist. Es handelt sich hier im einzelnen um den Vorlauftemperaturfühler 27, den Rücklauftemperaturfühler 28, den im Abgassammelraum angeordneten Abgasinnenfühler 29 und den Abgassensor 30 für das Außenabgas, das eventuell über eine Strömungssicherung 120 aus einem der Geräte 1, 2 oder 3 entweicht.

Auf der Leitung 22, die gleichermaßen als Leitungsbündel zu verstehen ist, sind die sicherheitsgerichteten Temperaturfühler angeschlossen, also der in einem Wärmetauscher 31 angeordnete Temperaturwächterfühler 32, der Abgassicherheitstemperaturbegrenzer 34 und ein Fußbodenanlegethermostat 35 und ggf. weitere.

Die Leitung 18 ist über eine Leitung 36, in der ein Entkoppler 37 vorgesehen ist, mit einem Eingang des Mikroprozessors 5 verbunden. Ein IIEEC-Bus 38 verbindet bidirektional den ASIC-Baustein mit dem Mikroprozessor 5. Der ASIC-Baustein weist mehrere Endstufen 39 auf, von denen eine mit einem Motor 40 des Gebläses 41 verbunden ist, das dann vorhanden ist, wenn es sich um einen Gebläsebrenner oder abgasgebläseunterstützten Brenner handelt. Gegebenenfalls kann auch die Leitung 42 auf ein Relais für dieses Gebläse unmittelbar geschaltet sein. Die zweite Endstufe 39 führt entweder direkt zu einem Motor 43, einer Umwälzpumpe 44 oder zu deren Relais, wenn es sich um einen Umlauf-Wasserheizer oder einen Kessel handelt. Die Ansteuerleitung ist mit 45 bezeichnet. Die dritte Endstufe führt über eine Leitung 46 zum Gasventil 16 oder dessen Relais oder Elektromagneten 47.

Von dieser Leitung 46 zweigt eine Koppelleitung 48, die einen Entkoppler 49 aufweist, zum Mikroprozessor 5 ab. Der Mikrocomputer 5 besitzt seinerseits eine Ausgangsleitung 50, in der eine von ihm gesonderte Endstufe 51 angeordnet ist, in deren Ausgang 52 ist eine Zuführungsleitung 53 geschaltet, die zu einem zweiten Gasventil 54 oder dessen Relais oder Elektromagneten 55 führt.

Über die bereits beschriebenen Bauelemente hinaus weist der ASIC-Baustein noch folgende weitere Bauelemente auf, zunächst einen Digital-Ausgangsgeber 56 und einen Digital-Eingangserfasser 57, wobei der Digital-Ausgangsgeber über zwei Leitungen 58 und 59 mit den zugehörigen Endstufen 39 verbunden ist. Eine weitere Verbindung besteht über die Leitung 60 zum Speicher 61, mit dem auch der Digital-Eingangserfasser über eine Leitung 62 verbunden ist. Der Eingang des Digital-Eingangserfassers besteht aus der Leitung 18.

Weiterhin besitzt der ASIC-Baustein 6 einen Digitalanalogwandler 63, der einerseits über eine Leitung 64 mit dem Speicher 61 und über eine Leitung 65 mit einem Multiplexer 66 verbunden ist. Eingangsleitungen des Multiplexers bilden die Leitungen 21 und 22. Der Multiplexer 66 ist über eine Leitung 67 mit einem Analogdigitalwandler 68 verbunden, dessen Ausgangsleitung 69 mit dem Speicher 61 verbunden ist.

Von Speicher 61 führt eine erste Leitung 70 zu einem Sicherheits-Watchdog 71, deren Ausgang über eine Leitung 72 über ein analoges Und-Glied 73 mit einer der Endstufen 39 verbunden ist.

Eine weitere Leitung 74 führt von Speicher 61 zu einem Verfügbarkeits-Watchdog 75, dessen Ausgang über eine Leitung 76 mit einem Und-Glied 77 verbunden ist, dessen Ausgang seinerseits die Reset-Leitung 17 bildet. Der zweite Eingang dieses Und-Gliedes 77 ist von einer Leitung 78 gebildet, die einerseits einen weiteren Eingang 79 des analogen Und-Gliedes 73 bildet und die weiterhin ihren Ausgang von einer Spannungsüberwachungsschaltung 80 erhält, die auf dem ASIC-Baustein angeordnet ist. Weiterhin findet sich auf dem ASIC-Baustein eine Plausibilitätsprüfungsschaltung 81, deren Ausgang eine Leitung 82 bildet, die einen weiteren Eingang des analogen Und-Gliedes 73 bildet. Die Eingänge 83 und 84 bilden Ausgangsleitungen vom Digital-Eingangserfasser 57 und von der Leitung 72 kommend.

Von der Leitung 53 führt noch eine mit einem Entkoppler 85 versehene Leitung 86 zurück zum Mikrocomputer 5.

Der von einem atmosphärischen Gasbrenner 90 beheizte Umlauf-Wasserheizer 1 weist neben dem Brenner 90 noch einen Sekundär-Wärmetauscher 91 auf. Der Wärmetauscher 31 ist über eine Vorlaufleitung 92 mit einer Verzweigungsstelle 93 verbunden, von der einerseits die zum Sekundär-Wärmetauscher 91 führende Verbindungsleitung 94, zum anderen eine Heizkörpervorlaufleitung 95 abgeht, die zu einer Heizungsanlage 96 führt. Von dieser geht eine Heizkörperrücklaufleitung 97 ab, die zusammen mit einer Sekundär-Wärmetauscher-Rücklaufleitung 98 zusammen zur Rücklaufleitung 99 führt, in der die Pumpe 44 angeordnet ist.

Oberhalb des Primärwärmetauschers 91 ist innerhalb der Strömungssicherung 120 ein Abgassammelraum 100 vorgesehen, in dem der Abgasinnensensor 29 angeordnet ist und auch der Abgassicherheitstemperaturbegrenzer 34. Der Abgassammelraum ist über eine Abgashaube 101 und ein Abgasableitrohr 102 mit der Atmosphäre verbunden.

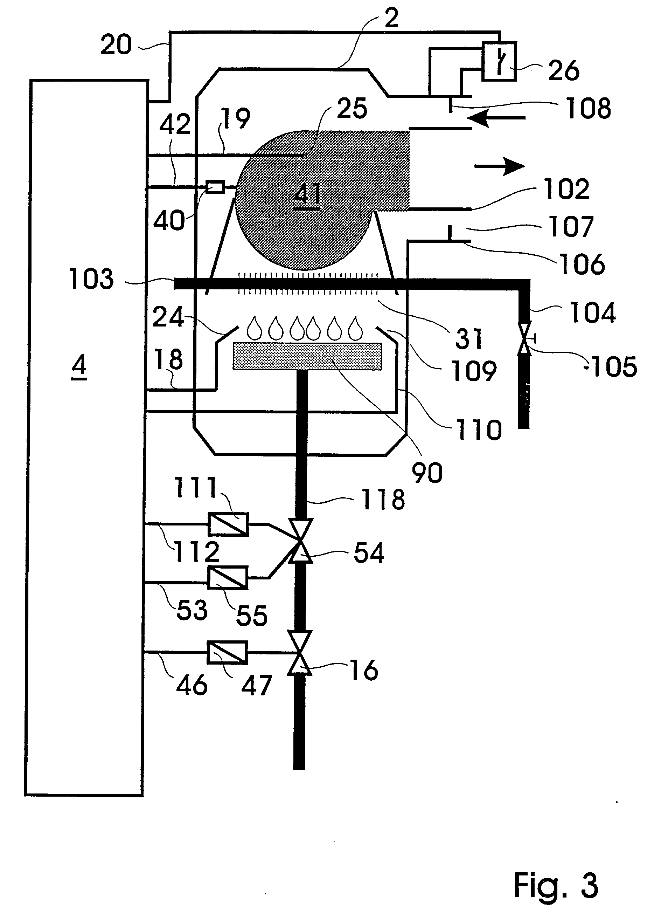

Beim Ausführungsbeispiel gemäß Figur 3 ist der Primärwärmetauscher 31 mit einer Kaltwassereinlaufleitung 103 und einer Warmwasserauslaufleitung 104 verbunden, in der ein Zapfventil 105 angeordnet ist. Das Gebläse 41 ist abgasseitig angeordnet, sein Auslaß ist mit dem Abgasrohr 102 verbunden. Dieses Abgasrohr ist von einem Lufteinlaßrohr 106 umgeben, der ringförmige Zwischenraum 107 zwischen beiden dient als Lufteinlaßrohr. In diesem Ringraum ist eine Blende 108 vorgesehen, an der Engstelle dieser Blende ist der Geber 26 für die Luftmangelsicherung angeordnet. Er mißt den Wirkdruck des Luftmassendurchsatzes. Dem Brenner 90 ist eine Zündelektrode 109 zugeordnet, die ihre Zündenergie über eine Leitung 110 von der Steuereinheit 4 erhält. Das Gasventil 54 kann sowohl vom Hubmagneten 55 wie auch von einem weiteren Hubmagneten 111 erregt werden, der über eine Leitung 112 von der Steuer- und Überwachungseinheit 4 angesteuert wird.

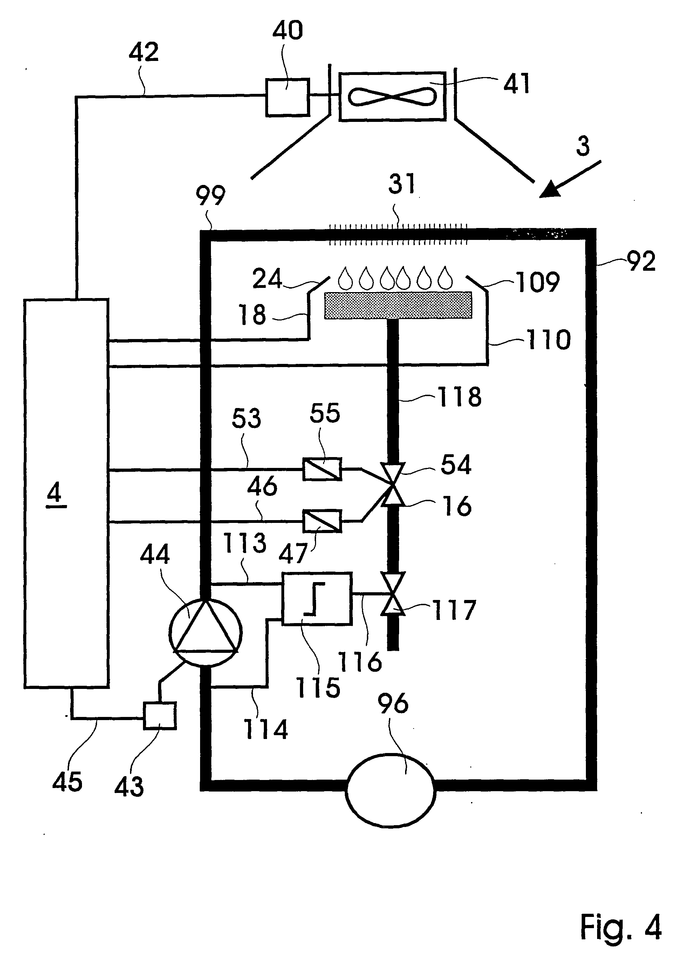

Der Wärmetauscher 31 ist beim Ausführungsbeispiel nach Figur 4 als Gußglieder-Kesselblock ausgebildet, er ist an die Vorlaufleitung 92 und die Rücklaufleitung 99 wie ein Umlauf-Wasserheizer angeschlossen. Stromauf und stromab der Pumpe sind zwei Leitungen 113 und 114 angeordnet, die zu einem Strömungsschalter 115 führen. Bei ausreichendem Pumpendifferenzdruck wird der Strömungsschalter 115 betätigt und betätigt seinerseits über eine Stellstange 116 ein hydraulisch wirkendes Gasventil 117, das im Zuge der Gasleitung 118 in Serie mit dem Gasventil 54/16 angeordnet ist.

Zur Vorgabe eines Soll-Wertes für die Temperaturregelung, die Teil der Steuer- und Überwachungseinrichtung ist, ist ein Temperaturfühler 119 vorgesehen, der über eine Leitung 121 mit der Steuer- und Überwachungseinrichtung 4 verbunden ist. Anhand der herrschenden Außentemperatur ist es dann möglich, eine Heizkurve zu bilden, das heißt, einen gleitend variablen Temperatur-Soll-Wert, der der Außentemperatur folgt. Mit diesem Soll-Wert wird dann der Ist-Wert des Temperaturfühlers 27 verglichen. Ist der Ist-Wert der Vorlauftemperatur zu niedrig, so liegt eine Regelabweichung vor. Bei kaltem Gerät, das heißt bei Start des Gerätes 1, 2 oder 3, wenn zum Beispiel über eine nicht dargestellte Schaltuhr der Soll-Wert der Vorlauftemperatur hochgesetzt wird, wird eine solche Regelabweichung für die Steuer- und Überwachungseinheit 4 ersichtlich. Ist-Wert-Geber-Signale stehen an den Leitungen 21 und 22 des ASIC-Bausteines an und werden auf den Speicher 61 gegeben. Über den Bus 38 fragt der Mikroprozessor 5 diese Signale ab und verarbeitet sie unter Benutzung der in den Speichern 7 - 10 niedergelegten Speicherwerten. Ist eine Wärmeanforderung vorhanden, so wird diese wieder über den Bus 38 an den Speicher 61 zurückgegeben, und als Ergebnis resultiert auf der Leitung 16 ein Befehl zur Öffnung des Gasventils. Parallel hierzu wird der Pumpenmotor 43 über die Leitung 45 an Spannung gelegt, und wenn in dem fraglichen Gerät vorhanden, vergleiche Ausführungsbeispiele nach Fig. 3 und 4, auch das Gebläse 41. Damit wird in bekannter Weise der Brenner 90 über die Zündelektrode 109 gezündet, und von der Überwachungselektrode 24 wird zutreffendenfalls die Flamme erkannt.

Auf der Leitung 18 erscheint dann ein lonisationsstromsignal, was an die Steuer- und Überwachungseinrichtung 4 gegeben wird. Der Zündvorgang dauert 10 s, erfolgt während dieser Zeit keine Zündung, wird das Gerät verriegelnd abgeschaltet, indem die Endstufe 39 für die Leitung 16 verriegelnd stromlos geschaltet wird. Ist ein zweites Gasventil vorhanden, zum Beispiel bei den Geräten nach Fig. 3 und 4, wird auch das zweite Gasventil stromlos geschaltet, und zwar unmittelbar vom Mikroprozessor 5 über die Leitung 53. Ist ein zweites Gasventil, zum Beispiel nach dem Gerät der Fig. 4 von einem hydraulisch betätigten Gasventil 117 gesteuert, so wird dann der Pumpenmotor 43 stromlos geschaltet, so daß auch dieses Gasventil schließt. Auch diese Schließung ist verriegelnd. Für den Fall, daß die Flamme brennt und der entsprechende lonisationsstrom von der Elektrode 24 erfaßt ist, arbeitet die Steuer- und Überwachungseinrichtung 4 als Vorlauftemperaturregler mit gleitendem von der Außentemperatur abhängigem Soll-Wert. Das Gerät arbeitet modulierend, das heißt, einer der beiden Antriebe, hier der Antrieb 55, arbeitet stetig steuerbar, so daß mit Höhe des Erregerstroms im Magneten 55 das zugehörige Gasventil 54 stetig öffnet oder schließt.

Bei Erlöschen der Regelanforderung, wenn also der Vorlauftemperatur-lst-Wert dem Soll-Wert entspricht, wird das Magnetventil des Gasbrenners 90 zum Schließen gebracht. Bei nächster Wärmeanforderung wird es wieder geöffnet. Sollte der Temperaturfühler 27 als Ist-Wert-Geber für die Vorlauftemperatur defekt sein oder aus anderen Gründen einen falschen Wert anzeigen, so sperrt bei weiter steigender Vorlauftemperatur der Temperaturfühler 32 die Stromversorgung des Gasventils beziehungsweise die des Pumpenmotors, um so bei einer höheren Temperatur, etwa 90 °C, das Gerät stillzusetzen.

Für den Fall, daß der Schornsteinzug des Gerätes im Abgasrohr 102 nicht ordentlich arbeitet, kann es zu Abgasaustritt kommen. Dieses Abgas beaufschlagt den Temperaturfühler 30, so daß dieser einen höheren Temperaturwert als den der Raumtemperatur annimmt. Durch eine Auswertung der Differenz der Temperaturfühler 29 und 30 wird auch dann, wie eben beschrieben, das Gasventil stromlos gesetzt und gegebenenfalls der Pumpenmotor stillgesetzt, um beide Gasventile zum Schließen zu bringen. Das gleiche geschieht bei blockierender Pumpe, weil dann kein Druckdifferenzsignal auf den Leitungen 113 und 114 vorliegt. Bei den Geräten nach den Fig. 3 und 4 kann es noch vorkommen, daß der Abgasventilator nicht ordnungsgemäß arbeitet, wenn kein ausreichender Luftdurchsatz zustande kommt, beispielsweise bei schlecht arbeitendem Gebläsemotor 14 oder bei verstopfter Abgas- oder Luftleitung 102 beziehungsweise 107. So gibt entweder der Drehzahlgeber 25 des Gebläses 41 ein unzureichendes Spannungssignal ab oder die Luftmangelsicherung 26 reagiert. In beiden Fällen werden die Gasventile und gegebenenfalls der Pumpenmotor stillgesetzt. Bei einem Gerät nach dem Ausführungsbeispiel gemäß Fig. 4 kann dies allerdings nicht erfaßt werden. Hier wird nur die Motordrehzahl erfaßt, gleichgültig ob und wieviel Luft gefördert wird.

Folglich wird bei einem Gerät nach dem Ausführungsbeispiel gemäß Fig. 4 noch ein Wirkdruckgeber für Luftmassendurchsatz oder eine andere Überwachungseinheit, die auf den Luftdurchsatz anspricht, vorhanden sein. Die Steuer- und Überwachungseinheit 4 kann anhand der über die Leitungen angeschalteten Sensoren erkennen, um was für ein Gerät es sich handelt.

Die Fühler werden aber noch auf abnormale Werte überwacht, wenn ein Fühler beispielsweise Temperaturen im Minus-°C-Bereich anzeigt, wird das Gerät verriegelnd abgeschaltet. Es gibt aber noch andere Möglichkeiten, mit denen das Gerät über die Steuer- und Überwachungseinrichtung abgeschaltet werden kann beziehungsweise auch werden mußt: Es ist bereits beschrieben worden, daß die Spannungsversorgung sowohl für den Mikroprozessor wie auch für ASIC-Baustein von der Leitung 11 her kommt und daß dies eine Gleichspannungsquelle ist. Über den Spannungsregler 12 wird der Mikroprozessor versorgt. Die Spannungsversorgung für den ASIC-Baustein ist über den Spannungsregler 15 von dieser Spannung abgeleitet und wird vom Spannungsregler 15 geregelt. Der Spannungsregler 15 erzeugt eine geregelte Spannung von 5 Volt für alle digitalen Bauelemente des ASIC-Bausteins. Der Spannungsregler 15 liest aber noch über die Leitung 23 die Spannung ab, die der Spannungsregler 12 im Mikroprozessor bereitstellt. Weichen diese beiden Spannungen um einen größeren Betrag als etwa 2 Volt voneinander ab, so erzeugt der ASIC-Baustein ein Sperrsignal auf den Endstufenleitungen 42 bis 46, so daß Gasventil, Pumpe und gegebenenfalls Lüftermotor verriegelnd stromlos gesetzt werden.

Parallel hierzu wird über die Leitung 17 ein Reset-Signal auf den Mikroprozessor 5 gegeben, der dann seine Tätigkeit einstellt. Durch dieses Reset-Signal wird auch die Leitung 53 verriegelnd stromlos. Sollte der Spannungswert als Ausgang des Spannungsreglers 15 unter einen gewissen Wert fallen, so werden gleichermaßen die Ausgangsleitungen 42, 45 und 46 stromlos gesetzt, so daß die angeschlossenen Verbraucher, wie Gasventile, Gebläse und/oder Pumpe nicht mehr anlaufen oder weiterlaufen können. Es ist weiterhin eine Schutzvorrichtung für eine Überspannung auf der Leitung 13 vorhanden.

Ein anderer Sicherheitsaspekt der Steuer- und Überwachungseinrichtung 4 bilden die beiden Watchdog-Schaltungen 71 und 75. Der Watchdog 71 ist als sogenannter Sicherheits-Watchdog ausgebildet, der Watchdog 75 als sogenannter Verfügbarkeits-Watchdog. Eine Rolle spielen die beiden Watchdog-Schaltungen insbesondere beim Start der Geräte.

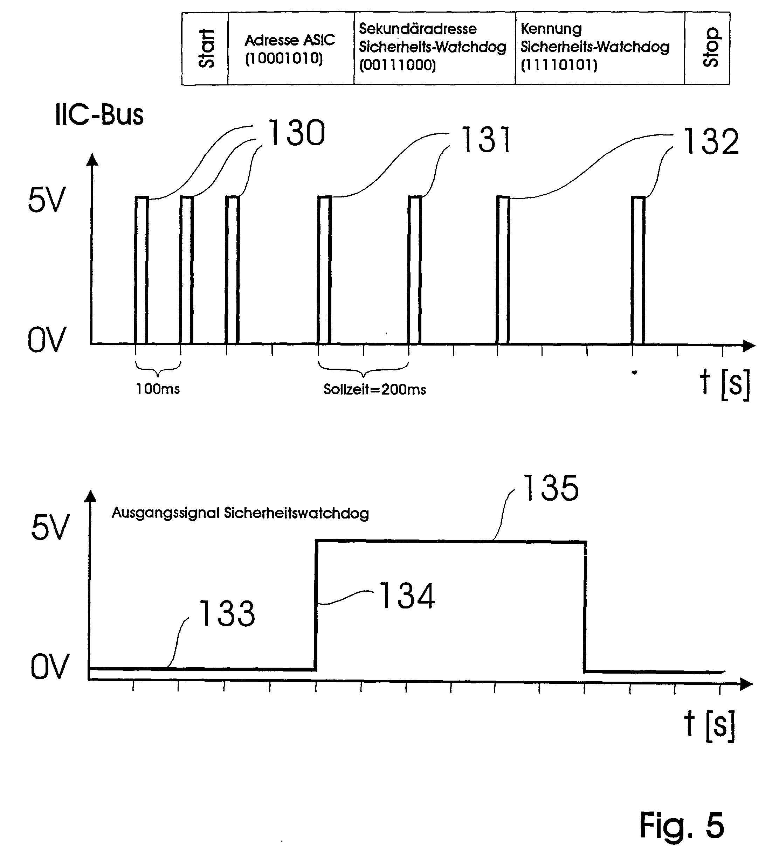

Wie bereits vorhin beschrieben, resultiert auf dem Bus 38 ein Startsignal, was in den Speicher 61 eingegeben wird. Zum Öffnen des Gasventils über die Leitung 16 muß der Sicherheits-Watchdog 71 bestimmte Impulse erhalten, die in der Fig. 5, oberes Diagramm, abgebildet sind. Hier sind drei Impulsgruppensorten 130 bis 132 dargestellt, die sich durch unterschiedliche Zeitabstände kennzeichnen. So liegt der Soll-Abstand zum Öffnen oder Offenhalten des Abgasventils auf der Leitung 16 bei 200 ms. Nur wenn regelmäßig Impulse alle 200 ms, also Impulse 131, dem Watchdog 71 zugeführt werden, öffnet das Gasventil oder bleibt es offen. Wird der Impulsabstand niedriger, vergleiche Impulsbild 131, schließt das Gasventil wieder beziehungsweise öffnet erst gar nicht. Das gleiche gilt, wenn Impulse 132 mit einem größeren Soll-Zeit-Abstand, hier 300 ms, ankommen. Auch hier resultiert ein verriegelndes Schließen oder gar nicht Öffnen des Gasventils.

Der Watchdog 71 ist also auf die richtige Zeitfolge der eingehenden Impulse abgestimmt. Hierbei wird über den Bus 38 eine Adressenfolge übertragen, die Teil der Impulse 130 bis 132 ist und die zunächst einmal den ASIC selbst adressiert, wenn in dem Speicher 61 oder im Sicherheits-Watchdog 71 etwas zu veranlassen ist. Die zweite Adresse spricht den Speicherplatz im Speicher 61 des Sicherheits-Watchdog 71 an und die dritte Adresse hierüber den Sicherheits-Watchdog selber. Kommt diese Adressierung nicht im richtigen Abstand, also hier alle 200 ms, so gibt der Watchdog 71 Fehlalarm, das heißt, schaltet verriegelnd ab.

Der Verfügbarkeits-Watchdog 75 muß auch in einer bestimmten Zeit mindestens einmal einen Impuls regelmäßig erhalten, sonst schaltet er verriegelnd ab. Er gibt über die Leitung 17 ein Reset-Signal an den Mikroprozessor 5 ab.

Die Folge richtiger oder falscher Impulsbilder ist dann aus der unteren Kurve 133 bis 135 der Fig. 5 ersichtlich, kommen die Impulse 130 zu schnell, so wird das Ausgangssignal des Sicherheits-Watchdog nahe 0 sein, kommen sie in richtige Art und Weise gemäß dem Kurventeil 135, wird das Gasventil über die Leitung 16 korrekt geöffnet. Bei Übergang von einem richtigen zu einem falschen Impulsbild oder umgekehrt resultiert ein Spannungssprung 134. Arbeitet der Sicherheits-Watchdog 71 korrekt, so liegt ein Dauerspannungssignal von der Endstufe 39 auf der Leitung 16 zum Öffnen des Gasventils. Dieses Signal liegt dann über die Leitung 48 und den Entkoppler 49 am Mikroprozessor 5. Dieses Signal wird mit der Regelabweichung verglichen, und soll eine Wärmeanforderung gegeben sein, stimmen beide Signale überein. Ist das Sicherheitsventil allerdings offen, ohne daß eine Regelabweichung vorliegt, so sind die Signale auf den Leitungen 48 und 38 nicht übereinstimmend. So erfolgt das Abschalten des Gerätes durch Wegnahme der Spannung auf der Leitung 53. Gleichzeitig wird über den Bus 38 die Wärmeanforderung weggeschaltet. Der Plausibilitätsprüfungsschalter 81 ist zum Beispiel über die Leitung 84 mit dem Ausgang des Sicherheits-Watchdog 71 verbunden. Andererseits werden der Plausibilitätsprüfungsschaltung 81 auch die Signale des Flammenwächters über die Leitung 83 übertragen. Es findet nun eine Plausibilitätsprüfung statt, daß einerseits die Flamme brennt, andererseits das Gasventil auch offen sein soll. Widersprechen sich die beiden Signale, findet ein verriegelndes Abschalten über die Leitung 82 und das Und-Glied 73 statt, so daß die Endstufe 39 für die Leitung 16 stromlos wird.

Zur Umsetzung der von analogen Fühlern auf die Leitungen 21 und 22 gegebenen Signale dient ein Analog-Digital-Wandler, der diese Signale in Digitalwerte umsetzt. Sie können dann über die Leitung 69 dem Speicher 61 zum Ablagern aufgegeben werden.

Ein solcher Analog-Digital-Wandler kann allerdings auch Fehlfunktionen ausführen. Um dies zu erkennen, erzeugt der Digital-Analog-Umsetzer 63 aus bekannten Digitalwerten auf der Leitung 65 Analogwerte, die der Analog-Digital-Wandler 66 wieder in Digitalwerte umsetzt. Da diese Digitalwerte aber auch über die Leitung 64 dem Speicher 61 bekannt sind, kann der Speicher den Original-Digitalwert mit dem umgesetzten Digitalwert vergleichen, und bei Inkonsistenz beider Signale wird der Mikroprozessor 5, dem diese beiden Werte über den Bus 38 verfügbar sind, eine verriegelnde Abschaltung über die Leitung 53 vornehmen.

Die Steuer- und Überwachungseinrichtung 4 weist einen Multiplexer 66 auf, der die einzelnen analogen Geber zyklisch abfragt. Da dieser Multiplexer Fehlfunktionen aufweisen kann, zum Beispiel nicht mehr Weiterschalten oder Kurzschlüsse oder Leitungsunterbrechungen abtastet, wird zyklisch jeder der Eingänge des Multiplexers, also jede der Leitungen 21 oder 22 beziehungsweise jeder der daran angeschlossenen Fühler zyklisch auf Masse geschaltet und dann wird geprüft, ob sich ein Spannungswert auf einem anderen Eingang dieses Multiplexers verändert hat.

Insbesondere ist diese Prüfung des Multiplexers für die sicherheitsrelevanten Temperaturfühler, also die Temperaturfühler 29 und 30, wichtig. Wird zum Beispiel der Eingang des Temperaturfühlers 29 im Multiplexer zyklisch auf Masse gesetzt, so darf sich das Signal des Temperaturfühlers 30 nicht ändern und umgekehrt. Ändert es sich trotzdem, so findet eine verriegelnde Abschaltung über den Mikrocomputer 5 statt, der diesen Zustand über den Bus 38 erfährt.

Es ist im übrigen möglich, daß das Gasventil 117 nicht hydraulisch betätigt wird, sondern daß der Strömungsschalter 115 elektrisch arbeitet. Hierzu könnte man einen Membranschalter verwenden, der bei Pumpendruck angesteuert wird und der einen elektrischen Kontakt gibt, mit dem eine elektrische Spannung auf die Leitung 116 für das Magnetventil 117 geschaltet wird. Genauso könnte man auch die Spannungsführung der Leitung 45 für den Pumpenmotor 43 abfragen und das Gasventil 117 elektrisch nur dann öffnen, wenn ein Spannungssignal für den Pumpenmotor 43 vorhanden ist.

Auch das Anschalten des Gasventils über die Leitung 53 wird gesichert. Es wird in regelmäßigen Zeitabständen die Spannung auf der Leitung 53 vom Mikroprozessor 5 fortgenommen, aber nur so kurzzeitig, daß der zugehörige Hubmagnet 55 des Gasventils 54 dies aufgrund seiner Trägheit nicht bemerkt. Bei der Leitung 52 sind diese Spannungslöcher jedoch meßbar und sie werden den Mikroprozessor über die Leitung 86 rückgemeldet. Sind die Spannungslöcher nicht vorhanden, erfolgt eine verriegelnde Abschaltung dieses Gasventils mit dem Mikroprozessor 5. Dies bekommt der ASIC-Baustein über den Bus 38 mitgeteilt und veranlaßt dann eine Schließung des zweiten Gasventils.

## Patentansprüche

1. Steuer- und Überwachungseinrichtung für ein brennstoffbeheiztes Heizgerät (1, 2 oder 3) mit einem Mikroprozessor (5) und einem ASIC-Baustein (6), die beide über einen Bus (38) miteinander verkoppelt sind, und die Komponenten des Heizgerätes - wie zum Beispiel Brennstoffventil (16/54) - ansteuern, die mit einer Spannungsquelle (13) verbunden sind, **dadurch gekennzeichnet, daß** der ASIC-Baustein (6) unmittelbar Leistungsendstufen (39) für die zu steuernden Komponenten (Gebläsemotor (14), Magneten des Brennstoffventils (47, 55, 111) und gegebenenfalls einen Motor der Umwälzpumpe (43/44)) aufweist, daß der ASIC-Baustein-Ausgang (46) für den Hubmagneten des Gasventils (16) über eine Leitung (48) mit dem Mikrocomputer (5) verbunden ist, so daß letzterer die Ansteuerung des Brennstoffventils überwacht und daß die Steuereinrichtung den Ausgang eines Sicherheits-Watchdog (71) mit dem Flammensignal vergleicht und daß die Spannungsversorgung des Brennstoffventils (16) nach einer Zeit t bei Widersprüchen zwischen beiden Signalen über die Plausibilitätsprüfungsschaltung (81) abschaltet.

2. Steuer- und Überwachungseinrichtung nach Anspruch 1, **dadurch gekennzeichnet, daß** der ASIC-Baustein-Ausgang (46) einen Watchdog-Baustein (71) aufweist.

3. Steuer- und Überwachungseinrichtung nach Anspruch 1, **dadurch gekennzeichnet, daß** der ASIC-Baustein (6) eine eigenständige Spannungsversorgung (14) aufweist, die von der Spannungsversorgung des Mikrocomputers (5) abgeleitet ist.

4. Steuer- und Überwachungseinrichtung nach Ansprüche 1 bis 3, **dadurch gekennzeichnet, daß** der Mikrocomputer über einen Spannungsregler (12) mit Betriebsspannung über eine Leitung (11) versorgt ist und daß diese Betriebsspannung durch den ASIC-Baustein (6) überwacht ist.

5. Steuer- und Überwachungseinrichtung nach Anspruch 4, **dadurch gekennzeichnet, daß** der ASIC-Baustein (6) einen Referenz-Spannungserzeuger aufweist und daß bei Unterschreiten einer unteren Spannungsgrenze der Referenzspannung das Gasventil abgeschaltet wird und daß der Reset zum Mikroprozessor betätigt ist.

6. Steuer- und Überwachungseinrichtung nach einem der Ansprüche 1 bis 5, **dadurch gekennzeichnet, daß** der ASIC-Baustein (6) einen Analog-Digitalwandler (68) aufweist, dessen Überwachung durch Vorgabe von definierten Analogwerten durch einen zusätzlichen Digital-Analogwandler (63) stattfindet.

7. Steuer- und Überwachungseinrichtung nach einem der Ansprüche 1 bis 6, **dadurch gekennzeichnet, daß** der ASIC-Baustein (6) einen Multiplexer (66) aufweist, der dadurch überwacht ist, daß jeweils einer der Eingänge des Multiplexers nach Masse geschaltet wird und bei dem geprüft wird, ob sich ein anderer Eingang desselben Multiplexers verändert hat.

## Claims

1. A control and monitoring system for a fuel-heated heater (1, 2 or 3) comprising a microprocessor (5) and an ASIC device (6) coupled with each other via a bus (38) and controlling the components of a heater - for example a fuel valve (16/54) - which are connected to a voltage source (13), **characterised in that** the ASIC device (6) directly incorporates power outputs (39) for the components to be controlled (blower motor (14), magnets of the fuel valve (47, 55, 111) and, if required, a motor for a circulating pump (43, 44)), that the ASIC output (46) for the lifting magnet of the gas valve (16) is connected via a line (48) to the microcomputer (5), so that the latter monitors the control of the fuel valve, and that the control system compares the output of a safety watchdog (71) with the flame signal and that the power supply of the fuel valve (16) switches off after a time "t" via a plausibility check circuit (81) if there are inconsistencies between the two signals.

2. A control and monitoring system as claimed in Claim 1, **characterised in that** the ASIC output (46) comprises a watchdog device (71).

3. A control and monitoring system as claimed in Claim 1, **characterised in that** the ASIC output (6) comprises a voltage supply of its own (14) which is derived from the voltage supply of the microcomputer (5).

4. A control and monitoring system as claimed in Claims 1 to 3, **characterised in that** the microcomputer, via a voltage controller (12), is supplied with an operating voltage via a line (11) and that such operating voltage is monitored by the ASIC device (6).

5. A control and monitoring system as claimed in Claim 4, **characterised in that** the ASIC device (6) comprises a reference voltage generator and that, if the voltage falls below a lower voltage limit of the reference voltage, the gas valve is switched off and that the reset to the microprocessor is actuated.

6. A control and monitoring system as claimed in any of Claims 1 to 5, **characterised in that** the ASIC device (6) comprises an analog-digital converter (68) which is monitored by the setpoint input of defined analog values by an additional digital-analog converter (63).

7. A control and monitoring system as claimed in any of Claims 1 to 6, **characterised in that** the ASIC device (6) comprises a multiplexer (66) which is monitored **in that** in each case one of the inputs of the multiplexer is connected to ground with a check being made whether another input of the same multiplexer has undergone any change.

## Revendications

1. Dispositif de commande et de contrôle pour un appareil de chauffage (1, 2 ou 3) marchant sur combustibles, avec un microprocesseur (5) et un élément ASIC (6) reliés entre eux par un bus (38) et commandant les composants de l'appareil de chauffage - tels que valves d'alimentation (16/54) -, reliés à une source de tension (13), dispositif **caractérisé par le fait que** l'élément ASIC (6) est doté directement d'étages finaux (39) pour les composants à commander (moteur de ventilateur (14), électro-aimants de valves d'alimentation (47,55,111) et, le cas échéant, un moteur de la pompe de circulation (43/44)), que la sortie de l'élément ASIC (46) pour l'électro-aimant de la soupape à gaz (16) est reliée par un câble (48) au micro-ordinateur (5) de sorte que ce dernier contrôle la commande de la valve d'alimentation et que le dispositif de commande compare la sortie d'un watchdog de sécurité (71) au signal de flammes et que l'alimentation en tension de la soupape à gaz (16) est arrêtée après un temps t, par l'intermédiaire du montage contrôleur de plausibilité (81), en cas de contradiction entre les deux signaux.

2. Dispositif de commande et de contrôle suivant la revendication 1, **caractérisé par le fait que** la sortie (46) de l'élément ASIC comprend un élément watchdog (71).

3. Dispositif de commande et de contrôle suivant la revendication 1, **caractérisé par le fait que** l'élément ASIC (6) comprend une alimentation en tension (14) indépendante, déduite de l'alimentation en tension du micro-ordinateur (5).

4. Dispositif de commande et de contrôle suivant les revendications 1 à 3, **caractérisé par le fait que** le micro-ordinateur est alimenté en tension de service par l'intermédiaire d'un régulateur de tension (12), par un câble (11), et que cette tension est contrôlée par l'élément ASIC (6).

5. Dispositif de commande et de contrôle suivant la revendication 4, **caractérisé par le fait que** l'élément ASIC (6) comprend un générateur de tension de référence et que, lorsque la tension de référence descend au-dessous d'une limite inférieure, la soupape à gaz est mise hors circuit et que la remise à zéro visant le microprocesseur est actionnée.

6. Dispositif de commande et de contrôle suivant l'une des revendications 1 à 5, **caractérisé par le fait que** l'élément ASIC (6) comprend un convertisseur analogique-digital (68) contrôlé par un convertisseur digital-analogique (63) à l'aide de valeurs analogiques définies données.

7. Dispositif de commande et de contrôle suivant l'une des revendications 1 à 6, **caractérisé par le fait que** l'élément ASIC (6) comprend un multiplexeur (66) contrôlé, l'une des entrées du multiplexeur étant mise à la terre et les autres entrées étant vérifiées pour relever d'éventuels changements.
